(19) Europäisches Patentamt / European Patent Office / Office européen des brevets

(11) **EP 3 393 147 B1**

(12) **EUROPEAN PATENT SPECIFICATION**

(45) Date of publication and mention
of the grant of the patent:
**18.12.2019 Bulletin 2019/51**

(51) Int Cl.:
***H04W 4/70*** (2018.01)

(21) Application number: **17769374.4**

(22) Date of filing: **16.03.2017**

(86) International application number:
**PCT/CN2017/076984**

(87) International publication number:
**WO 2017/162097 (28.09.2017 Gazette 2017/39)**

(54) **CHANNEL TRANSMISSION METHOD, APPARATUS AND SYSTEM FOR NB-IOT**

KANALÜBERTRAGUNGSVERFAHREN, VORRICHTUNG UND SYSTEM FÜR NB-IOT

PROCÉDÉ, APPAREIL ET SYSTÈME DE TRANSMISSION DE CANAL POUR NB-IOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2016 CN 201610162224**

(43) Date of publication of application:
**24.10.2018 Bulletin 2018/43**

(73) Proprietor: **Huawei Technologies Co., Ltd.
Longgang District
Shenzhen, Guangdong 518129 (CN)**

(72) Inventors:
 • **LIU, Zheng**
  **Shenzhen**
  **Guangdong 518129 (CN)**
 • **LUO, Chao**
  **Shenzhen**
  **Guangdong 518129 (CN)**
 • **YANG, Yubo**
  **Shenzhen**
  **Guangdong 518129 (CN)**

(74) Representative: **Goddar, Heinz J.**
**Boehmert & Boehmert
Anwaltspartnerschaft mbB
Pettenkoferstrasse 22
80336 München (DE)**

(56) References cited:
 WO-A1-2014/067048    CN-A- 103 096 379
 CN-A- 103 716 841    US-A1- 2015 264 626
 US-A1- 2016 037 514   US-A1- 2016 081 084

 • "3rd Generation Partnership Project; Technical Specification Group GSM/EDGE Radio Access Network; Cellular system support for ultra-low complexity and low throughput Internet of Things (CIoT) (Release 13)", 3GPP STANDARD; 3GPP TR 45.820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG1, no. V13.1.0, 18 December 2015 (2015-12-18), pages 1-495, XP051047128, [retrieved on 2015-12-18]
 • NOKIA NETWORKS: "Frequency hopping for NB-IoT", 3GPP DRAFT; R1-160002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053325, Retrieved from the Internet: URL:http://www.3gpp.org/ftp/Meetings_3GPP_SYNC/RAN1/Docs/ [retrieved on 2016-01-17]
 • ERICSSON: "Frequency hopping patterns for MTC", 3GPP DRAFT; R1-156408 FREQUENCY HOPPING PATTERNS FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 7 November 2015 (2015-11-07), XP051022297, Retrieved from the Internet: URL:http://www.3gpp.org/ftp/tsg_ran/WG1_RL 1/TSGR1_83/Docs/ [retrieved on 2015-11-07]

- LENOVO: "Frequency hopping for different channels for Rel-13 eMTC", 3GPP DRAFT; R1-155807, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051002610, Retrieved from the Internet: URL:http://www.3gpp.org/ftp/Meetings_3GPP_SYNC/RAN1/Docs/ [retrieved on 2015-10-04]

- PANASONIC: "Design of frequency hopping of narrow band", 3GPP DRAFT; R1-152904_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 15 May 2015 (2015-05-15), XP050969400, Retrieved from the Internet: URL:http://www.3gpp.org/ftp/tsg_ran/WG1_RL1/TSGR1_81/Docs/ [retrieved on 2015-05-15]

## Description

## TECHNICAL FIELD

Embodiments of this application relate to communications technologies, and in particular, to a channel transmission method, apparatus, and system for Narrowband Internet of Things (Narrowband- Internet of Things, NB-IoT).

## BACKGROUND

Internet of Things (Internet of Things, IoT) is "the Internet connecting things to each other". The Internet of Things expands communication between user ends in the Internet to communication between any things.

In the prior art, the 3rd generation partnership project (3rd Generation Partnership Project, 3GPP) has passed a new research subject to study a method that supports the IoT with extremely low complexity and low costs in a cellular network, and approves the new research subject as an NB-IoT subject. The NB-IoT is a narrowband solution that is run at a 180 kHz spectrum. An NB-IoT terminal needs to perform sending and receiving only in a 180 kHz narrowband.

US 2016/037514 A1 describes configuring machine-type communication (MTC) User Equipment (UE) using an evolved Node B (eNB), including broadcasting, from the eNB, a physical downlink control channel (PDCCH) transmission on a licensed band.

"3rd Generation Partnership Project; Technical Specification Group GSM/EDGE Radio Access Network; Cellular System support for ultra-low complexity and low throughput Internet of Things (CIoT) (Release 13)" describes that selecting a Gb based architecture for evolutions of GSM is better suited than S1 based architectures terms of transmission efficiency and device energy consumption.

NOKIA NETWORKS, "Frequency hopping for NB-IoT", describes three deployment scenarios for frequency hopping for NB-IoT, namely "Stand-alone Operation", utilizing the spectrum being used by GERAN Systems as a replacement of one or more GSM carriers, "Guard band Operation", utilizing the unused resource blocks within a LTE carrier's guard-band, and "In-band Operation", utilizing resource blocks within a normal LTE carrier.

However, there is a problem in the prior art that a transmission bandwidth of the NB-IoT is very narrow, consequently causing a gain of frequency diversity to be relatively small.

## SUMMARY

This application provides a channel transmission method, a computer readable storage medium, and a channel transmission apparatus according to the independent claims, to resolve a prior-art problem that a transmission bandwidth of the NB-IoT is very narrow, consequently causing a gain of frequency diversity to be relatively small. Advantageous further embodiments are defined in the corresponding dependent claims.

According thereto, the NB-IoT base station determines, based on the frequency hopping information, the time-frequency resource location of the channel after the frequency hopping, and performs channel transmission with the NB-IoT terminal on the time-frequency resource corresponding to the time-frequency resource location, so that the frequency hopping is introduced into the NB-IoT, thereby increasing the gain of the frequency diversity through the frequency hopping.

Further according thereto, the NB-IoT base station determines the initial frequency domain location, the frequency hopping frequency interval, and the frequency hopping time interval of the channel, so that the NB-IoT base station can obtain the frequency hopping information, and then the NB-IoT base station can perform frequency hopping based on the frequency hopping information.

Even further according thereto, PRBs are divided into groups, and a two-level frequency hopping manner of intra-group frequency hopping and inter-group frequency hopping is implemented, so that frequency hopping within a larger frequency range and a limited transmission time can be implemented. In addition, a size of a group in an NB-IoT system is set to a size of a group in an eMTC system, so that coexistence of the NB-IoT system and the eMTC system can be better implemented.

Also according thereto, the frequency domain location of the $i^{th}$ hop of the channel is located within the guard band of one end of the LTE system transmission band, and the frequency domain location of the $(i+1)^{th}$ hop of the channel is located within the guard band of the other end of the LTE system transmission band, so that the channel can obtain a relatively large gain of the frequency diversity.

The present invention defines a method, a computer-readable storage medium and an apparatus according to independent claims 1, 3 and 4, respectively. Further embodiments are set forth in the dependent claims 2 and 5-11.

## BRIEF DESCRIPTION OF DRAWINGS

FIG. 1 is a flowchart of Embodiment 1 of a channel transmission method for NB-IoT according to this application;

FIG. 2 is a schematic diagram of intra-group and inter-group frequency hopping of Embodiment 3 of a channel transmission method for NB-IoT according to this application;

FIG. 3 is a schematic diagram of frequency hopping of Embodiment 4 of a channel transmission method for NB-IoT according to this application;

FIG. 4 is a schematic structural diagram of Embodiment 1 of a channel transmission apparatus for NB-IoT according to this application; and

FIG. 5 is a schematic structural diagram of Embodiment 1 of an NB-IoT base station according to this application.

## DESCRIPTION OF EMBODIMENTS

This application is applied to NB-IoT, and the NB-IoT includes an NB-IoT terminal and an NB-IoT base station. A narrowband (NB) means that, the NB-IoT terminal needs to perform sending and receiving only in a 180 kHz narrowband. Correspondingly, the NB-IoT base station needs to communicate with the same NB-IoT terminal only in the 180 kHz narrowband.

There are the following three deployment manners of the NB-IoT:

    1. Independent frequency band deployment: An independent frequency band is used in this deployment. For example, one or more carriers of a GSM network are used.

    2. Guard band deployment: A resource block unused in a Long Term Evolution (Long Term Evolution, LTE) guard band is used in this deployment.

    3. Inband deployment: One or more physical resource blocks (Physical Resource Block, PRB) on an LTE carrier are used in this deployment.

It should be noted that, a function of the NB-IoT base station in this application may be implemented by using a base station in an existing deployed cellular network. The NB-IoT terminal in this application may be a terminal that performs thing-to-thing communication in Internet of Things.

A transmission bandwidth of the NB-IoT is very narrow, and therefore there is a problem that a gain of frequency diversity is relatively small.

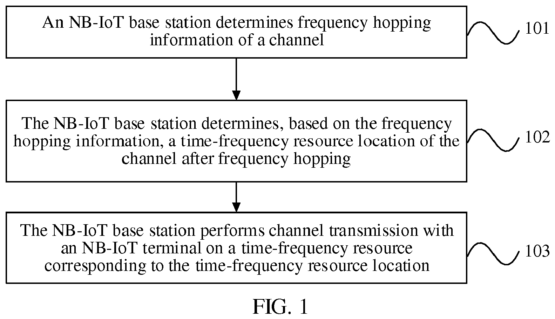

FIG. 1 is a flowchart of Embodiment 1 of a channel transmission method for NB-IoT according to this application. As shown in FIG. 1, the method in this embodiment may include the following steps.

Step 101: An NB-IoT base station determines frequency hopping information of a channel.

Step 102: The NB-IoT base station determines, based on the frequency hopping information, a time-frequency resource location of the channel after frequency hopping.

Optionally, the time-frequency resource location includes a time domain location and a frequency domain location.

Step 103: The NB-IoT base station performs channel transmission with an NB-IoT terminal on a time-frequency resource corresponding to the time-frequency resource location.

In this step, the NB-IoT base station transmits a channel to the NB-IoT terminal on the time-frequency resource corresponding to the time-frequency resource location; or the NB-IoT base station receives, on the time-frequency resource corresponding to the time-frequency resource location, a channel transmitted by the NB-IoT terminal.

In this embodiment, the NB-IoT base station determines, based on the frequency hopping information, the time-frequency resource location of the channel after frequency hopping, and performs channel transmission with the NB-IoT terminal on the time-frequency resource corresponding to the time-frequency resource location, so that the frequency hopping is introduced into the NB-IoT, thereby increasing the gain of the frequency diversity through the frequency hopping.

It should be noted that, step 101 to step 103 may alternatively be performed by the NB-IoT terminal, and this corresponds to implementation on an NB-IoT terminal side. In the implementation on the NB-IoT terminal side, it needs only to change an execution body of step 101 and step 102 from the NB-IoT base station to the NB-IoT terminal, and change step 103 to that the NB-IoT terminal performs channel transmission with the NB-IoT base station on the time-frequency resource corresponding to the time-frequency resource location.

## Embodiment 2 of a channel transmission method for NB-IoT

Optionally, based on Embodiment 1 of the channel transmission method for NB-IoT in this application, step 101 may specifically include: determining, by the NB-IoT base station, an initial frequency domain location, a frequency hopping frequency interval, and a frequency hopping time interval of the channel.

Correspondingly, for an NB-IoT terminal side, that an NB-IoT terminal determines frequency hopping information of a channel may specifically include: determining, by the NB-IoT terminal, an initial frequency domain location, a frequency hopping frequency interval, and a frequency hopping time interval of the channel.

Optionally, the determining, by the NB-IoT base station, an initial frequency domain location of the channel may specifically include: determining, by the NB-IoT base station, the initial frequency domain location of the channel based on a cell identifier ID of a cell in which the channel is located; or randomly selecting, by the NB-IoT base station, the initial frequency domain location of the channel from all unallocated frequency domain locations.

Optionally, the determining, by the NB-IoT base station, a frequency hopping time interval of the channel may specifically include: determining, by the NB-IoT base station, the frequency hopping time interval based on a type of the channel; or determining, by the NB-IoT base station, the frequency hopping time interval based on a coverage level of the NB-IoT terminal; or selecting, by the NB-IoT base station, an interval from an interval set as the frequency hopping time interval.

Optionally, the determining, by the NB-IoT base station, a frequency hopping frequency interval of the channel specifically includes: determining, by the NB-IoT base station, the frequency hopping frequency interval based on a system bandwidth of the NB-IoT; or selecting, by the NB-IoT base station, a frequency from a frequency set as the frequency hopping frequency interval.

Optionally, the determining, by the NB-IoT terminal, an initial frequency domain location of the channel includes: determining, by the NB-IoT terminal, the initial frequency domain location of the channel based on a cell identifier ID of a cell in which the channel is located; or determining, by the NB-IoT terminal, the initial frequency domain location based on first notification signaling sent by the NB-IoT base station, where the first notification signaling is used for indicating the initial frequency domain location.

Optionally, the determining, by the NB-IoT terminal, a frequency hopping time interval of the channel includes: determining, by the NB-IoT terminal, the frequency hopping time interval based on a type of the channel; or determining, by the NB-IoT terminal, the frequency hopping time interval based on a coverage level of the NB-IoT terminal; or determining, by the NB-IoT terminal, the frequency hopping time interval based on second notification signaling sent by the NB-IoT base station, where the second notification signaling is used for indicating the frequency hopping time interval.

Optionally, the determining, by the NB-IoT terminal, a frequency hopping frequency interval of the channel includes: determining, by the NB-IoT terminal, the frequency hopping frequency interval based on a system bandwidth of the NB-IoT; or determining, by the NB-IoT terminal, the frequency hopping frequency interval based on third notification signaling sent by the NB-IoT base station, where the third notification signaling is used for indicating the frequency hopping frequency interval.

It should be noted that, the first notification signaling, the second notification signaling, and the third notification signaling may be same notification signaling, or may be different notification signaling.

The following describes, by using examples, manners of determining frequency hopping information of different channels.

1. Narrowband-physical broadcast channel (Narrowband-Physical Broadcast Channel, NB-PBCH)

An initial frequency domain location of an NB-PBCH may be determined by using a cell identifier ID of a cell in which the channel is located, a frequency hopping time interval and a frequency hopping frequency interval of the NB-PBCH may be preset values, and the preset values may be values specified by a related protocol.

It should be noted that, in an inband deployment scenario, when NB-PBCH channel transmission is performed between the NB-IoT terminal and the NB-IoT base station, the NB-IoT terminal cannot determine the system bandwidth of the NB-IoT. Therefore, NB-PBCH frequency hopping may be performed by assuming that the system bandwidth of the NB-IoT is a minimum bandwidth. For example, it is assumed that the minimum bandwidth is 3 MHz (corresponding to 15 PRBs), and because six most central PRBs of an LTE system are used for transmitting a synchronization signal or a broadcast channel of the LTE system, the NB-PBCH may perform frequency hopping within a 3 MHz bandwidth range with an NB-IoT center frequency as the center except a bandwidth range corresponding to the six most central PRBs of the LTE system. In a guard band deployment scenario, an initial frequency offset when the NB-IoT terminal performs network synchronization can indicate a system bandwidth that can be used for LTE.

2. Channel of a narrowband-system information block 1 (Narrowband-System Information Block 1, NB-SIB1)

Before performing NB-SIB1 transmission, the NB-IoT terminal and the NB-IoT base station has obtained the system bandwidth of the NB-IoT by using master information block (Master Information Block, MIB) information carried on the NB-PBCH. Therefore for the NB-SIB1, frequency hopping may be performed within a transmission bandwidth of the NB-IoT.

When needing to indicate an initial frequency domain location, a frequency hopping time interval, and a frequency hopping frequency interval of the NB-SIB1 by using notification signaling, the NB-IoT base station may implement the indicating by using the MIB information carried on the NB-PBCH.

3. Narrowband-physical downlink control channel (Narrowband-Physical Downlink Control Channel, NB-PDCCH)

When needing to indicate an initial frequency domain location, a frequency hopping time interval, and a frequency hopping frequency interval of the NB-PDCCH by using notification signaling, the NB-IoT base station may implement the indicating by using NB-SIB1 information or Radio Resource Control (Radio Resource Control, RRC) signaling.

4. Narrowband-physical downlink shared channel (Narrowband-Physical Downlink Shared Channel, NB-PDSCH)

When needing to indicate an initial frequency domain location, a frequency hopping time interval, and a frequency hopping frequency interval of the NB-PDSCH by using notification signaling, the NB-IoT base station may implement the indicating by using RRC signaling or by using downlink control information (Downlink Control Information, DCI) signaling carried on the NB-PDCCH.

5. Narrowband-physical uplink shared channel (Narrowband-Physical Uplink Shared Channel, NB-PUSCH)

When needing to indicate an initial frequency domain location, a frequency hopping time interval, and a frequency hopping frequency interval of the NB-PUSCH by using notification signaling, the NB-IoT base station may implement the indicating by using the RRC signaling or by using the DCI signaling carried on the NB-PDCCH.

In this embodiment, the NB-IoT terminal (or the NB-IoT base station) determines the initial frequency domain location, the frequency hopping frequency interval, and the frequency hopping time interval of the channel, so that the NB-IoT terminal (or the NB-IoT base station) can obtain the frequency hopping information, and then the NB-IoT terminal (or the NB-IoT base station) can perform frequency hopping based on the frequency hopping information.

**Embodiment 3 of a channel transmission method for NB-IoT**

Optionally, based on Embodiment 1 or Embodiment 2 of the channel transmission method for NB-IoT in this application, the time-frequency resource includes N physical resource block PRB groups, and each PRB group includes M consecutive PRBs, where M and N are integers greater than 0; and

correspondingly, the frequency hopping time interval includes an intra-group frequency hopping time interval and an inter-group frequency hopping time interval; and the frequency hopping frequency interval includes an intra-group frequency hopping frequency interval and an inter-group frequency hopping frequency interval, where the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB.

Optionally, the determining, by the NB-IoT base station (or the NB-IoT terminal) based on the initial frequency domain location, the frequency hopping frequency interval, and the frequency hopping time interval of the channel, a time-frequency resource location of the channel after frequency hopping includes:

determining, by the NB-IoT base station (or the NB-IoT terminal) based on the initial frequency domain location, an intra-group frequency hopping frequency domain interval, and an inter-group frequency hopping frequency domain interval of the channel, a frequency domain location of the channel after the frequency hopping; and
determining, by the NB-IoT base station (or the NB-IoT terminal) based on the intra-group frequency hopping time interval and the inter-group frequency hopping time interval of the channel, a time domain location of the channel after the frequency hopping.

Optionally, the determining, the NB-IoT base station (or the NB-IoT terminal) based on the initial frequency domain location, an intra-group frequency hopping frequency domain interval, and an inter-group frequency hopping frequency domain interval of the channel, a frequency domain location of the channel after the frequency hopping includes:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and
for the frequency domain location $F_i$ of the $i^{th}$ hop, determining a location $P_i$ of $F_i$ in the PRB group by using the following formula (2):

$$P_i = (P_0 + B) \bmod M \quad (2)$$

where i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency domain interval, and B indicates the intra-group frequency hopping frequency domain interval.

Optionally, the determining, by the NB-IoT base station (or the NB-IoT terminal) based on the intra-group frequency hopping time interval and the inter-group frequency hopping time interval of the channel, a time domain location of the channel after the frequency hopping includes:
for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \bmod D) \quad (3)$$

$$T_{i+1} = T_i + D \quad (4)$$

where i is an integer greater than 0, $T_i$ indicates a time domain location of an $i^{th}$ hop, C indicates the inter-group frequency hopping time interval, and D indicates the intra-group frequency hopping time interval.

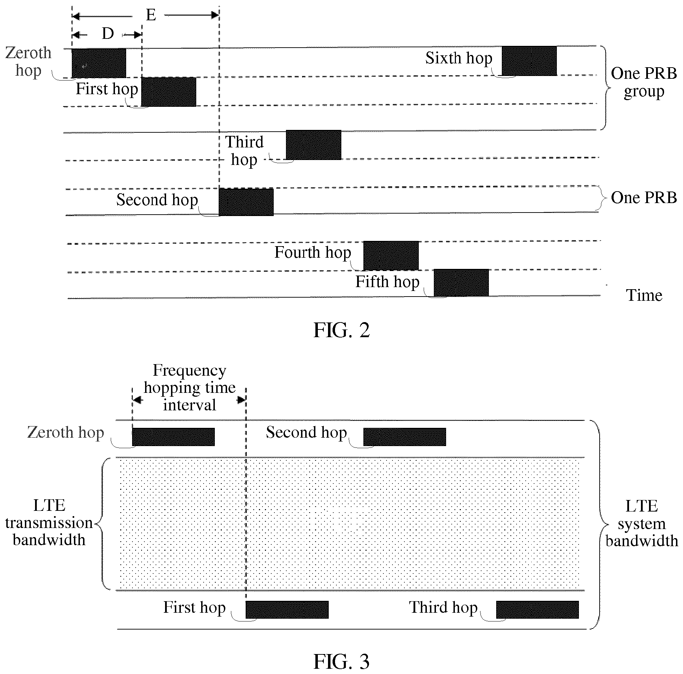

FIG. 2 is a schematic diagram of intra-group and inter-group frequency hopping of Embodiment 3 of a channel transmission method for NB-IoT according to this application. Descriptions are provided by using an example in which both M and N are 3. Black boxes indicate time domain locations and frequency domain locations of the channel after frequency hopping.

Optionally, M may be pre-agreed on by the NB-IoT base station and the NB-IoT terminal, and N may be further determined based on the system bandwidth of the NB-IoT. For example, it is assumed that one PRB group includes three consecutive PRBs, and an NB-IoT system with a 10 MHz bandwidth includes 50/3 = 16 PRB groups.

Alternatively, optionally, N may be determined based on the system bandwidth of the NB-IoT, and after N is determined, M is further determined based on N and the system bandwidth of the NB-IoT.

In this embodiment, PRBs are divided into groups, and a two-level frequency hopping manner of intra-group frequency hopping and inter-group frequency hopping is implemented, so that frequency hopping within a larger frequency range and a limited transmission time can be implemented. In addition, a size of a group in an NB-IoT system is set to a size of a group in an enhanced machine type communication (enhanced Machine Type Communication, eMTC) system, so that coexistence of the NB-IoT system and the eMTC system can be better implemented.

**Embodiment 4 of a channel transmission method for NB-IoT**

Optionally, based on Embodiment 1 or Embodiment 2 of the channel transmission method for NB-IoT in this application, when a deployment manner of the NB-IoT is guard band deployment, a frequency domain location of an $i^{th}$ hop of the channel is located within a guard band of one end of a Long Term Evolution LTE system transmission band, and a frequency domain location of an $(i+1)^{th}$ hop of the channel is located within a guard band of the other end of the LTE system transmission band, where i is an integer greater than 0.

FIG. 3 is a schematic diagram of frequency hopping of Embodiment 4 of a channel transmission method for NB-IoT according to this application. Black boxes indicate time domain locations and frequency domain locations of the channel after frequency hopping. Black boxes indicate time domain locations and frequency domain locations of the channel after frequency hopping.

In this case, that an initial frequency domain location of an NB-PBCH is determined by using a cell identifier ID of a cell in which the channel is located may be specifically: parity of the cell ID is used to implicitly indicate that the initial frequency domain location is within which one of guard bands at two ends.

In this embodiment, the frequency domain location of the $i^{th}$ hop of the channel is located within the guard band of one end of the Long Term Evolution LTE system transmission band, and the frequency domain location of the $(i+1)^{th}$ hop of the channel is located within the guard band of the other end of the LTE system transmission band, so that the channel can obtain a relatively large gain of the frequency diversity.

It should be noted that, the solutions in Embodiment 1 to Embodiment 3 of the channel transmission method for NB-IoT are applied to NB-IoT whose deployment manner is inband deployment, guard band deployment, and independent frequency band deployment; the solution in Embodiment 4 of the channel transmission method for NB-IoT may be applied to NB-IoT whose deployment manner is the guard band deployment.

It should be noted that, when the deployment manner of the NB-IoT is the inband deployment, in this application, the system bandwidth of the NB-IoT may be a system bandwidth of an LTE system to which an LTE carrier used in the inband deployment belongs; when the deployment manner of the NB-IoT is the guard band deployment, in this application, the system bandwidth of the NB-IoT may be a bandwidth of a guard band; or when the deployment manner of the NB-IoT is the independent frequency band deployment, in this application, the system bandwidth of the NB-IoT may be a bandwidth of an independent frequency band occupied by the NB-IoT.

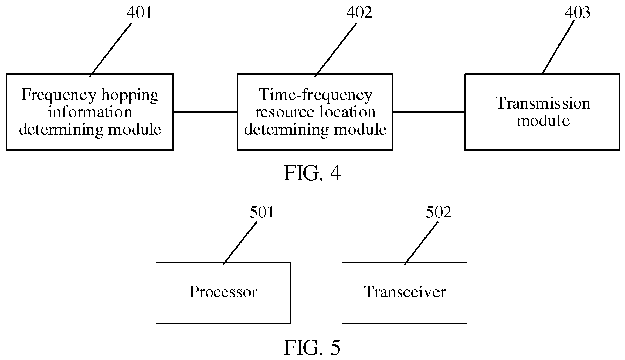

FIG. 4 is a schematic structural diagram of Embodiment 1 of a channel transmission apparatus for NB-IoT according to this application. As shown in FIG. 4, the apparatus in this embodiment may include: a frequency hopping information determining module 401, a time-frequency resource location determining module 402, and a transmission module 403. The frequency hopping information determining module 401 is configured to determine frequency hopping information of a channel; the time-frequency resource location determining module 402 is configured to determine, based on the frequency hopping information, a time-frequency resource location of the channel after frequency hopping; and the transmission module 403 is configured to perform channel transmission with an NB-IoT terminal on a time-frequency resource corresponding to the time-frequency resource location.

The apparatus in this embodiment may be configured to execute the technical solution on an NB-IoT base station side in the method embodiment shown in FIG. 1. The implementation principle and technical effects are similar. Details are not described herein again.

**Embodiment 2 of a channel transmission apparatus for NB-IoT**

Optionally, based on Embodiment 1 of the channel transmission apparatus for NB-IoT in this application, the frequency hopping information determining module 401 is specifically configured to determine an initial frequency domain location, a frequency hopping frequency interval, and a frequency hopping time interval of the channel.

Optionally, that the frequency hopping information determining module 401 determines an initial frequency domain location of the channel specifically includes:

determining the initial frequency domain location of the channel based on a cell identifier ID of a cell in which the channel is located; or randomly selecting the initial frequency domain location of the channel from all unallocated frequency domain locations.

Optionally, that the frequency hopping information determining module 401 determines a frequency hopping time interval of the channel specifically includes: determining the frequency hopping time interval based on a type of the channel; or determining the frequency hopping time interval based on a coverage level of the NB-IoT terminal; or selecting an interval from an interval set as the frequency hopping time interval.

Optionally, that the frequency hopping information determining module 401 determines a frequency hopping frequency interval of the channel specifically includes:

determining the frequency hopping frequency interval based on a system bandwidth of the NB-IoT; or selecting a frequency from a frequency set as the frequency hopping frequency interval.

The apparatus in this embodiment may be configured to execute the technical solution on an NB-IoT base station side in method Embodiment 2. The implementation principle and technical effects are similar. Details are not described herein again.

**Embodiment 3 of a channel transmission apparatus for NB-IoT**

Optionally, based on Embodiment 1 or Embodiment 2 of the channel transmission apparatus for NB-IoT in this application, the time-frequency resource includes N physical resource block PRB groups, and each PRB group includes M consecutive PRBs, where M and N are integers greater than 0; and

the frequency hopping time interval includes an intra-group frequency hopping time interval and an inter-group frequency hopping time interval; and the frequency hopping frequency interval includes an intra-group frequency hopping frequency interval and an inter-group frequency hopping frequency interval, where
the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB.

Optionally, the time-frequency resource location determining module 402 is specifically configured to:

determine, based on the initial frequency domain location, an intra-group frequency hopping frequency domain interval, and an inter-group frequency hopping frequency domain interval of the channel, a frequency domain location of the channel after the frequency hopping; and
determine, based on the intra-group frequency hopping time interval and the inter-group frequency hopping time interval of the channel, a time domain location of the channel after the frequency hopping.

Optionally, that the time-frequency resource location determining module 402 determines, based on the initial frequency domain location, an intra-group frequency hopping frequency domain interval, and an inter-group frequency hopping frequency domain interval of the channel, a frequency domain location of the channel after the frequency hopping specifically includes:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and
for the frequency domain location $F_i$ of the $i^{th}$ hop, determining a location $P_i$ of $F_i$ in the PRB group by using the following formula (2):

$$P_i = (P_0 + B) \bmod M \quad (2)$$

where i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency domain interval, and B indicates the intra-group frequency hopping frequency domain interval.

Optionally, that the time-frequency resource location determining module 402 determines, based on the intra-group frequency hopping time interval and the inter-group frequency hopping time interval of the channel, a time domain location of the channel after the frequency hopping specifically includes:
for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \mod D) \quad (3)$$

$$T_{i+1} = T_i + D \quad (4)$$

where i is an integer greater than 0, $T_i$ indicates a time domain location of an i<sup>th</sup> hop, C indicates the inter-group frequency hopping time interval, and D indicates the intra-group frequency hopping time interval.

Optionally, a deployment manner of the NB-IoT includes: inband deployment, guard band deployment, or independent frequency band deployment.

The apparatus in this embodiment may be configured to execute the technical solution on an NB-IoT base station side in method Embodiment 3. The implementation principle and technical effects are similar. Details are not described herein again.

**Embodiment 4 of a channel transmission apparatus for NB-IoT**

Optionally, based on Embodiment 1 or Embodiment 2 of the channel transmission apparatus for NB-IoT in this application, a deployment manner of the NB-IoT is guard band deployment, a frequency domain location of an i<sup>th</sup> hop of the channel is located within a guard band of one end of a Long Term Evolution LTE system transmission band, and a frequency domain location of an (i+1)<sup>th</sup> hop of the channel is located within a guard band of the other end of the LTE system transmission band, where i is an integer greater than 0.

The apparatus in this embodiment may be configured to execute the technical solution on an NB-IoT base station side in method Embodiment 4. The implementation principle and technical effects are similar. Details are not described herein again.

**Embodiment 5 of a channel transmission apparatus for NB-IoT**

A structure of an apparatus in this embodiment is similar to a structure of the apparatus shown in FIG. 4, and may similarly include a frequency hopping information determining module, a time-frequency resource location determining module, and a transmission module. The frequency hopping information determining module is configured to determine frequency hopping information of a channel; the time-frequency resource location determining module is configured to determine, based on the frequency hopping information, a time-frequency resource location of the channel after frequency hopping; and the transmission module is configured to perform channel transmission with an NB-IoT base station on a time-frequency resource corresponding to the time-frequency resource location.

The apparatus in this embodiment may be configured to execute the technical solution on an NB-IoT terminal side in the method embodiment shown in FIG. 1. The implementation principle and technical effects are similar. Details are not described herein again.

**Embodiment 6 of a channel transmission apparatus for NB-IoT**

Optionally, based on Embodiment 5 of the channel transmission apparatus for NB-IoT in this application, the frequency hopping information determining module is specifically configured to:
determine an initial frequency domain location, a frequency hopping frequency interval, and a frequency hopping time interval of the channel.

Optionally, that the frequency hopping information determining module determines an initial frequency domain location of the channel specifically includes:
determining the initial frequency domain location of the channel based on a cell identifier ID of a cell in which the channel is located; or determining the initial frequency domain location based on first notification signaling sent by the NB-IoT base station, where the first notification signaling is used for indicating the initial frequency domain location.

Optionally, that the frequency hopping information determining module determines a frequency hopping time interval of the channel specifically includes:
determining the frequency hopping time interval based on a type of the channel; or determining the frequency hopping time interval based on a coverage level of the NB-IoT terminal; or determining the frequency hopping time interval based on second notification signaling sent by the NB-IoT base station, where the second notification signaling is used for indicating the frequency hopping time interval.

Optionally, that the frequency hopping information determining module determines a frequency hopping frequency interval of the channel specifically includes:
determining the frequency hopping frequency interval based on a system bandwidth of the NB-IoT; or determining the frequency hopping frequency interval based on third notification signaling sent by the NB-IoT base station, where the third notification signaling is used for indicating the frequency hopping frequency interval.

The apparatus in this embodiment may be configured to execute the technical solution on an NB-IoT terminal side in method Embodiment 2. The implementation principle and technical effects are similar. Details are not described herein again.

**Embodiment 7 of a channel transmission apparatus for NB-IoT**

Optionally, based on Embodiment 5 or Embodiment 6 of the channel transmission apparatus for NB-IoT in this application, the time-frequency resource includes N physical resource block PRB groups, and each PRB group includes M consecutive PRBs, where M and N are integers greater than 0; and

the frequency hopping time interval includes an intra-group frequency hopping time interval and an inter-group frequency hopping time interval; and the frequency hopping frequency interval includes an intra-group frequency hopping frequency interval and an inter-group frequency hopping frequency interval, where
the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB.

Optionally, the time-frequency resource location determining module is specifically configured to:

determine, based on the initial frequency domain location, an intra-group frequency hopping frequency domain interval, and an inter-group frequency hopping frequency domain interval of the channel, a frequency domain location of the channel after the frequency hopping; and
determine, based on the intra-group frequency hopping time interval and the inter-group frequency hopping time interval of the channel, a time domain location of the channel after the frequency hopping.

Optionally, that the time-frequency resource location determining module determines, based on the initial frequency domain location, an intra-group frequency hopping frequency domain interval, and an inter-group frequency hopping frequency domain interval of the channel, a frequency domain location of the channel after the frequency hopping specifically includes:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and

for the frequency domain location $F_i$ of the $i^{th}$ hop, determining a location $P_i$ of $F_i$ in the PRB group by using the following formula (2):

$$P_i = (P_0 + B) \bmod M \quad (2)$$

where i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency domain interval, and B indicates the intra-group frequency hopping frequency domain interval.

Optionally, that the time-frequency resource location determining module determines, based on the intra-group frequency hopping time interval and the inter-group frequency hopping time interval of the channel, a time domain location of the channel after the frequency hopping specifically includes:
for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \bmod D) \quad (3)$$

$$T_{i+1} = T_i + D \quad (4)$$

where i is an integer greater than 0, $T_i$ indicates a time domain location of an $i^{th}$ hop, C indicates the inter-group frequency hopping time interval, and D indicates the intra-group frequency hopping time interval.

Optionally, a deployment manner of the NB-IoT includes: inband deployment, guard band deployment, or independent frequency band deployment.

The apparatus in this embodiment may be configured to execute the technical solution on an NB-IoT terminal side in method Embodiment 3. The implementation principle and technical effects are similar. Details are not described herein again.

**Embodiment 8 of a channel transmission apparatus for NB-IoT**

Optionally, based on Embodiment 5 or Embodiment 6 of the channel transmission apparatus for NB-IoT in this application, a deployment manner of the NB-IoT is guard band deployment, a frequency domain location of an $i^{th}$ hop of the channel is located within a guard band of one end of a Long Term Evolution LTE system transmission band, and a frequency domain location of an $(i+1)^{th}$ hop of the channel is located within a guard band of the other end of the LTE system transmission band, where i is an integer greater than 0.

The apparatus in this embodiment may be configured to execute the technical solution on an NB-IoT terminal side in method Embodiment 4. The implementation principle and technical effects are similar. Details are not described herein again.

This application further provides a channel transmission system for NB-IoT, including: the apparatus in any embodiment of Embodiment 1 to Embodiment 4 of the channel transmission apparatus for NB-IoT, and the apparatus in any embodiment of Embodiment 5 to Embodiment 8 of the channel transmission apparatus for NB-IoT.

FIG. 5 is a schematic structural diagram of Embodiment 1 of an NB-IoT base station according to this application. As shown in FIG. 5, the NB-IoT base station in this embodiment may include: a processor 501 and a transceiver 502. The processor 501 is configured to determine frequency hopping information of a channel. The processor 501 is further configured to determine, based on the frequency hopping information, a time-frequency resource location of the channel after frequency hopping. The transceiver 502 is configured to perform channel transmission with an NB-IoT terminal on a time-frequency resource corresponding to the time-frequency resource location.

It should be noted that, the transceiver 502 may be a component, for example, an antenna that has both receiving and sending functions; or may be two components, for example, one antenna that has a receiving function and one antenna that has a sending function.

The NB-IoT base station in this embodiment may be configured to execute the technical solution on an NB-IoT base station side in the method embodiment shown in FIG. 1. The implementation principle and technical effects are similar. Details are not described herein again.

### Embodiment 2 of an NB-IoT base station

Optionally, based on Embodiment 1 of the NB-IoT base station in this application, that the processor 501 determines frequency hopping information of a channel specifically includes: determining an initial frequency domain location, a frequency hopping frequency interval, and a frequency hopping time interval of the channel.

Optionally, that the processor 501 determines an initial frequency domain location of the channel specifically includes:
determining the initial frequency domain location of the channel based on a cell identifier ID of a cell in which the channel is located; or randomly selecting the initial frequency domain location of the channel from all unallocated frequency domain locations.

Optionally, that the processor 501 determines a frequency hopping time interval of the channel specifically includes:
determining the frequency hopping time interval based on a type of the channel; or determining the frequency hopping time interval based on a coverage level of the NB-IoT terminal; or selecting an interval from an interval set as the frequency hopping time interval.

Optionally, that the processor 501 determines a frequency hopping frequency interval of the channel specifically includes:
determining the frequency hopping frequency interval based on a system bandwidth of the NB-IoT; or selecting a frequency from a frequency set as the frequency hopping frequency interval.

The NB-IoT base station in this embodiment may be configured to execute the technical solution on an NB-IoT base station side in method Embodiment 2. The implementation principle and technical effects are similar. Details are not described herein again.

### Embodiment 3 of an NB-IoT base station

Optionally, based on Embodiment 1 or Embodiment 2 of the NB-IoT base station in this application, the time-frequency resource includes N physical resource block PRB groups, and each PRB group includes M consecutive PRBs, where M and N are integers greater than 0; and

the frequency hopping time interval includes an intra-group frequency hopping time interval and an inter-group frequency hopping time interval; and the frequency hopping frequency interval includes an intra-group frequency hopping frequency interval and an inter-group frequency hopping frequency interval, where

the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB.

Optionally, that the processor 501 determines, based on the frequency hopping information, a time-frequency resource location of the channel after frequency hopping specifically includes:

determining, based on the initial frequency domain location, an intra-group frequency hopping frequency domain interval, and an inter-group frequency hopping frequency domain interval of the channel, a frequency domain location of the channel after the frequency hopping; and
determining, based on the intra-group frequency hopping time interval and the inter-group frequency hopping time interval of the channel, a time domain location of the channel after the frequency hopping.

Optionally, that the processor 501 determines, based on the initial frequency domain location, an intra-group frequency hopping frequency domain interval, and an inter-group frequency hopping frequency domain interval of the channel, a frequency domain location of the channel after the frequency hopping specifically includes:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and

for the frequency domain location $F_i$ of the $i^{th}$ hop, determining a location $P_i$ of $F_i$ in the PRB group by using the following formula (2):

$$P_i = (P_0 + B) \bmod M \quad (2)$$

where i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency domain interval, and B indicates the intra-group frequency hopping frequency domain interval.

Optionally, that the processor 501 determines, based on the intra-group frequency hopping time interval and the inter-group frequency hopping time interval of the channel, a time domain location of the channel after the frequency hopping specifically includes:
for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \bmod D) \quad (3)$$

$$T_{i+1} = T_i + D \quad (4)$$

where i is an integer greater than 0, $T_i$ indicates a time domain location of an $i^{th}$ hop, C indicates the inter-group frequency hopping time interval, and D indicates the intra-group frequency hopping time interval.
Optionally, a deployment manner of the NB-IoT includes: inband deployment, guard band deployment, or independent frequency band deployment.
The NB-IoT base station in this embodiment may be configured to execute the technical solution on an NB-IoT base station side in method Embodiment 3.

The implementation principle and technical effects are similar. Details are not described herein again.

**Embodiment 4 of an NB-IoT base station**

Optionally, based on Embodiment 1 or Embodiment 2 of the NB-IoT base station in this application, a deployment manner of the NB-IoT is guard band deployment, a frequency domain location of an $i^{th}$ hop of the channel is located within a guard band of one end of a Long Term Evolution LTE system transmission band, and a frequency domain location of an $(i+1)^{th}$ hop of the channel is located within a guard band of the other end of the LTE system transmission band, where i is an integer greater than 0.
The NB-IoT base station in this embodiment may be configured to execute the technical solution on an NB-IoT base station side in method Embodiment 4. The implementation principle and technical effects are similar. Details are not described herein again.

**Embodiment 1 of an NB-IoT terminal**

A structure of an NB-IoT terminal in this embodiment is similar to a structure of the NB-IoT base station shown in FIG. 5, and may similarly include a processor and a transceiver. The processor is configured to determine frequency hopping information of a channel. The processor is further configured to determine, based on the frequency hopping information, a time-frequency resource location of the channel after frequency hopping. The transceiver is configured to perform channel transmission with an NB-IoT base station on a time-frequency resource corresponding to the time-frequency resource location.
The NB-IoT terminal in this embodiment may be configured to execute the technical solution on an NB-IoT terminal side in the method embodiment shown in FIG. 1. The implementation principle and technical effects are similar. Details are not described herein again.

**Embodiment 2 of an NB-IoT terminal**

Optionally, based on Embodiment 1 of the NB-IoT terminal in this application, that the processor determines frequency hopping information of a channel specifically includes:
determining an initial frequency domain location, a frequency hopping frequency interval, and a frequency hopping time interval of the channel.
Optionally, that the processor determines an initial frequency domain location of the channel specifically includes:
determining the initial frequency domain location of the channel based on a cell identifier ID of a cell in which the channel is located; or determining the initial frequency domain location based on first notification signaling sent by the NB-IoT base station, where the first notification signaling is used for indicating the initial frequency domain location.

Optionally, that the processor determines a frequency hopping time interval of the channel specifically includes:

determining the frequency hopping time interval based on a type of the channel; or determining the frequency hopping time interval based on a coverage level of the NB-IoT terminal; or determining the frequency hopping time interval based on second notification signaling sent by the NB-IoT base station, where the second notification signaling is used for indicating the frequency hopping time interval.

Optionally, that a determining module of the processor determines a frequency hopping frequency interval of the channel specifically includes:

determining the frequency hopping frequency interval based on a system bandwidth of the NB-IoT; or determining the frequency hopping frequency interval based on third notification signaling sent by the NB-IoT base station, where the third notification signaling is used for indicating the frequency hopping frequency interval.

The NB-IoT terminal in this embodiment may be configured to execute the technical solution on an NB-IoT terminal side in method Embodiment 2. The implementation principle and technical effects are similar. Details are not described herein again.

**Embodiment 3 of an NB-IoT terminal**

Optionally, based on Embodiment 1 or Embodiment 2 of the NB-IoT terminal in this application, the time-frequency resource includes N physical resource block PRB groups, and each PRB group includes M consecutive PRBs, where M and N are integers greater than 0; and

the frequency hopping time interval includes an intra-group frequency hopping time interval and an inter-group frequency hopping time interval; and the frequency hopping frequency interval includes an intra-group frequency hopping frequency interval and an inter-group frequency hopping frequency interval, where the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB.

Optionally, that the processor determines, based on the frequency hopping information, a time-frequency resource location of the channel after frequency hopping specifically includes:

determining, based on the initial frequency domain location, an intra-group frequency hopping frequency domain interval, and an inter-group frequency hopping frequency domain interval of the channel, a frequency domain location of the channel after the frequency hopping; and

determining, based on the intra-group frequency hopping time interval and the inter-group frequency hopping time interval of the channel, a time domain location of the channel after the frequency hopping.

Optionally, that the processor determines, based on the initial frequency domain location, an intra-group frequency hopping frequency domain interval, and an inter-group frequency hopping frequency domain interval of the channel, a frequency domain location of the channel after the frequency hopping specifically includes:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and
for the frequency domain location $F_i$ of the $i^{th}$ hop, determining a location $P_i$ of $F_i$ in the PRB group by using the following formula (2):

$$P_i = (P_0 + B) \bmod M \quad (2)$$

where i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency domain interval, and B indicates the intra-group frequency hopping frequency domain interval.

Optionally, that the processor determines, based on the intra-group frequency hopping time interval and the inter-group frequency hopping time interval of the channel, a time domain location of the channel after the frequency hopping specifically includes:

for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \bmod D) \quad (3)$$

$$T_{i+1} = T_i + D \quad (4)$$

where i is an integer greater than 0, $T_i$ indicates a time domain location of an $i^{th}$ hop, C indicates the inter-group frequency hopping time interval, and D indicates the intra-group frequency hopping time interval.

Optionally, a deployment manner of the NB-IoT includes: inband deployment, guard band deployment, or independent frequency band deployment.

The NB-IoT terminal in this embodiment may be configured to execute the technical solution on an NB-IoT terminal side in method Embodiment 3. The implementation principle and technical effects are similar. Details are not described herein again.

**Embodiment 4 of an NB-IoT terminal**

Optionally, based on Embodiment 1 or Embodiment 2 of the NB-IoT terminal in this application, a deployment manner of the NB-IoT is guard band deployment, a frequency domain location of an $i^{th}$ hop of the channel is located within a guard band of one end of a Long Term Evolution LTE system transmission band, and a frequency domain location of an $(i+1)^{th}$ hop of the channel is located within a guard band of the other end of the LTE system transmission band, where i is an integer greater than 0.

The NB-IoT terminal in this embodiment may be configured to execute the technical solution on an NB-IoT terminal side in method Embodiment 4. The implementation principle and technical effects are similar. Details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

**Claims**

1. A channel transmission method for Narrowband Internet of Things, NB-IoT, comprising:

   determining, by an NB-IoT terminal, frequency hopping information of a channel, comprising determining an initial frequency domain location, a frequency hopping frequency interval, and a frequency hopping time interval of the channel; and
   determining, by the NB-IoT terminal based on the frequency hopping information, a time-frequency resource location of the channel after frequency hopping;
   wherein the time-frequency resource comprises N physical resource block, PRB, groups, and each PRB group comprises M consecutive PRBs, wherein M and N are integers greater than 0; and
   the frequency hopping time interval comprises an intra-group frequency hopping time interval and an inter-group frequency hopping time interval; and the frequency hopping frequency interval comprises an intra-group frequency hopping frequency interval and an inter-group frequency hopping frequency interval, wherein
   the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB;
   wherein the time-frequency resource location includes a time domain location and a frequency domain location and the method further comprises:
   determining, by the NB-IoT terminal based on the initial frequency domain location, the intra-group frequency hopping frequency interval, and the inter-group frequency hopping frequency interval of the channel, the frequency domain location of the channel after the frequency hopping;
   determining, by the NB-IoT terminal based on the intra-group frequency hopping time interval and the inter-group frequency hopping time interval of the channel, the time domain location of the channel after the frequency hopping; and
   performing, by the NB-IoT terminal, channel transmission with an NB-IoT base station on a time-frequency resource corresponding to the time-frequency resource location.

2. The method according to claim 1, wherein the determining, by the NB-IoT terminal, an initial frequency domain location of the channel comprises:

   determining, by the NB-IoT terminal, the initial frequency domain location of the channel based on a cell identifier, ID, of a cell in which the channel is located; or
   determining, by the NB-IoT terminal, the initial frequency domain location based on first notification signaling sent by the NB-IoT base station, wherein the first notification signaling is used for indicating the initial frequency domain location.

3. A computer-readable storage medium comprising instructions which, when executed by a computer, cause the computer to carry out the method of claims 1 to 2.

4. A channel transmission apparatus for Narrowband Internet of Things, NB-IoT, comprising:

a frequency hopping information determining module, configured to

determine frequency hopping information of a channel; and
determine an initial frequency domain location, a frequency hopping frequency interval, and a frequency hopping time interval of the channel;

a time-frequency resource location determining module, configured to
determine, based on the frequency hopping information, a time-frequency resource location of the channel after frequency hopping;
wherein the time-frequency resource comprises N physical resource block, PRB, groups, and each PRB group comprises M consecutive PRBs, wherein M and N are integers greater than 0; and
the frequency hopping time interval comprises an intra-group frequency hopping time interval and an inter-group frequency hopping time interval; and the frequency hopping frequency interval comprises an intra-group frequency hopping frequency interval and an inter-group frequency hopping frequency interval, wherein the intra-group frequency hopping time interval is less than the inter-group frequency hopping time interval, and a remainder of the inter-group frequency hopping time interval mod the intra-group frequency hopping time interval is non-zero; the intra-group frequency hopping frequency interval is $L \times W$, and the inter-group frequency hopping frequency interval is $O \times M \times W$; and L and O are integers greater than 0, and W indicates a bandwidth occupied by one PRB; wherein the time-frequency resource location includes a time domain location and a frequency domain location and the time-frequency resource location determining module is further configured to

determine, based on the initial frequency domain location, the intra-group frequency hopping frequency interval, and the inter-group frequency hopping frequency interval of the channel, the frequency domain location of the channel after the frequency hopping; and
determine, based on the intra-group frequency hopping time interval and the inter-group frequency hopping time interval of the channel, the time domain location of the channel after the frequency hopping; and

a transmission module, configured to perform channel transmission with an NB-IoT base station on a time-frequency resource corresponding to the time-frequency resource location.

5. The apparatus according to claim 4, wherein that the frequency hopping information determining module determines an initial frequency domain location of the channel specifically comprises:

determining the initial frequency domain location of the channel based on a cell identifier, ID, of a cell in which the channel is located; or
determining the initial frequency domain location based on first notification signaling sent by the NB-IoT base station, wherein the first notification signaling is used for indicating the initial frequency domain location.

6. The apparatus according to claim 4 or 5, wherein that the frequency hopping information determining module determines a frequency hopping time interval of the channel specifically comprises:

determining the frequency hopping time interval based on a type of the channel; or
determining the frequency hopping time interval based on a coverage level at which an NB-IoT terminal is located; or
determining the frequency hopping time interval based on second notification signaling sent by the NB-IoT base station, wherein the second notification signaling is used for indicating the frequency hopping time interval.

7. The apparatus according to any one of claims 4 to 6, wherein that the frequency hopping information determining module determines a frequency hopping frequency interval of the channel specifically comprises:

determining the frequency hopping frequency interval based on a system bandwidth of the NB-IoT; or
determining the frequency hopping frequency interval based on third notification signaling sent by the NB-IoT base station, wherein the third notification signaling is used for indicating the frequency hopping frequency interval.

8. The apparatus according to claim 4, wherein that the time-frequency resource location determining module determines, based on the initial frequency domain location, an intra-group frequency hopping frequency interval, and an inter-group frequency hopping frequency interval of the channel, a frequency domain location of the channel after the frequency hopping specifically comprises:

for a frequency domain location $F_i$ of an $i^{th}$ hop, determining a PRB group $Z_i$ to which $F_i$ belongs by using the following formula (1):

$$Z_i = (Z_0 + A) \bmod N \quad (1);$$

and

for the frequency domain location $F_i$ of the $i^{th}$ hop, determining a location $P_i$ of $F_i$ in the PRB group by using the following formula (2):

$$P_i = (P_0 + B) \bmod M \quad (2)$$

wherein i is an integer greater than 0, $Z_0$ indicates a PRB group to which an initial frequency domain location $F_0$ belongs, $P_0$ indicates a location of $F_0$ in the PRB group, A indicates the inter-group frequency hopping frequency interval, and B indicates the intra-group frequency hopping frequency interval.

9. The apparatus according to claim 4, wherein that the time-frequency resource location determining module determines, based on the intra-group frequency hopping time interval and the inter-group frequency hopping time interval of the channel, a time domain location of the channel after the frequency hopping specifically comprises:

for a time domain location $T_{i+1}$ of an $(i+1)^{th}$ hop, when i+1 is an integer multiple of C mod D, determining $T_{i+1}$ by using the following formula (3); otherwise, determining $T_{i+1}$ by using the following formula (4):

$$T_{i+1} = T_i + (C \bmod D) \quad (3)$$

$$T_{i+1} = T_i + D \quad (4)$$

wherein i is an integer greater than 0, $T_i$ indicates a time domain location of an $i^{th}$ hop, C indicates the inter-group frequency hopping time interval, and D indicates the intra-group frequency hopping time interval.

10. The apparatus according to any one of claims 4 to 9, wherein a deployment manner of the NB-IoT comprises: inband deployment, guard band deployment, or independent frequency band deployment.

11. The apparatus according to any one of claims 4 to 7, wherein a deployment manner of the NB-IoT is guard band deployment, a frequency domain location of an $i^{th}$ hop of the channel is located within a guard band of one end of a Long Term Evolution, LTE, system transmission band, and a frequency domain location of an $(i+1)^{th}$ hop of the channel is located within a guard band of the other end of the LTE system transmission band, wherein i is an integer greater than 0.

**Patentansprüche**

1. Kanalübertragungsverfahren für Schmalband-Internet-der-Dinge, NB-IoT, umfassend:

Bestimmen, durch ein NB-IoT-Endgerät, von Frequenzsprunginformationen eines Kanals, umfassend Bestimmen eines Anfangsfrequenzdomänenorts, eines Frequenzsprungfrequenzintervalls und eines Frequenzsprungzeitintervalls des Kanals; und
Bestimmen, durch das NB-IoT-Endgerät, auf der Grundlage der Frequenzsprunginformationen, eines Zeit-Frequenz-Ressourcenorts des Kanals nach dem Frequenzsprung;
wobei die Zeit-Frequenz-Ressource N Physische-Ressource-Block-Gruppen bzw. PRB-Gruppen umfasst und jede PRB-Gruppe M aufeinanderfolgende PRBs umfasst, wobei M und N ganze Zahlen größer als 0 sind; und
das Frequenzsprungzeitintervall ein Intragruppen-Frequenzsprungzeitintervall und ein Intergruppen-Frequenzsprungzeitintervall umfasst; und das Frequenzsprungfrequenzintervall ein Intragruppen-Frequenzsprungfrequenzintervall und ein Intergruppen-Frequenzsprungfrequenzintervall umfasst, wobei
das Intragruppen-Frequenzsprungzeitintervall kleiner als das Intergruppen-Frequenzsprungzeitintervall ist und ein Rest des Intergruppen-Frequenzsprungzeitintervalls modulo dem Intragruppen-Frequenzsprungzeitintervall nicht null ist; das Intragruppen-Frequenzsprungfrequenzintervall LxW ist und das Intergruppen-Frequenzsprungfrequenzintervall OxMxW ist; und L und O ganze Zahlen größer 0 sind und W eine von einem PRB belegte Bandbreite angibt;
wobei der Zeit-Frequenz-Ressourcenort einen Zeitdomänenort und einen Frequenzdomänenort aufweist und das Verfahren ferner Folgendes umfasst:

Bestimmen, durch das NB-IoT-Endgerät, auf der Grundlage des Anfangsfrequenzdomänenorts, des Intragruppen-Frequenzsprungfrequenzintervalls und des Intergruppen-Frequenzsprungfrequenzintervalls des Kanals, des Frequenzdomänenorts des Kanals nach dem Frequenzsprung; Bestimmen, durch das NB-IoT-Endgerät, auf der Grundlage des Intragruppen-Frequenzsprungzeitintervalls und des Intergruppen-Frequenzsprungzeitintervalls des Kanals, des Zeitdomänenorts des Kanals nach dem Frequenzsprung; und Durchführen, durch das NB-IoT-Endgerät, von Kanalübertragung mit einer NB-IoT-Basisstation auf einer Zeit-Frequenz-Ressource, die dem Zeit-Frequenz-Ressourcenort entspricht.

2. Verfahren nach Anspruch 1, wobei das Bestimmen, durch das NB-IoT-Endgerät, eines Anfangsfrequenzdomänenorts des Kanals Folgendes umfasst:

Bestimmen, durch das NB-IoT-Endgerät, des Anfangsfrequenzdomänenorts des Kanals auf der Grundlage einer Zellenkennung, ID, einer Zelle, in welcher sich der Kanal befindet; oder Bestimmen, durch das NB-IoT-Endgerät, des Anfangsfrequenzdomänenorts auf der Grundlage einer durch die NB-IoT-Basisstation gesendeten ersten Benachrichtigungssignalisierung, wobei die erste Benachrichtigungssignalisierung zum Anzeigen des Anfangsfrequenzdomänenorts verwendet wird.

3. Computerlesbares Speichermedium, umfassend Anweisungen, die, wenn sie durch einen Computer ausgeführt werden, den Computer veranlassen, das Verfahren nach Ansprüchen 1 bis 2 auszuführen.

4. Kanalübertragungseinrichtung für Schmalband-Internet-der-Dinge, NB-IoT, umfassend:

ein Frequenzsprunginformationen-Bestimmungsmodul, ausgelegt zum Bestimmen von Frequenzsprunginformationen eines Kanals; und Bestimmen eines Anfangsfrequenzdomänenorts, eines Frequenzsprungfrequenzintervalls und eines Frequenzsprungzeitintervalls des Kanals; ein Zeit-Frequenz-Ressourcenort-Bestimmungsmodul, ausgelegt zum Bestimmen, auf der Grundlage der Frequenzsprunginformationen, eines Zeit-Frequenz-Ressourcenorts des Kanals nach dem Frequenzsprung; wobei die Zeit-Frequenz-Ressource N Physische-Ressource-Block-Gruppen bzw. PRB-Gruppen umfasst und jede PRB-Gruppe M aufeinanderfolgende PRBs umfasst, wobei M und N ganze Zahlen größer als 0 sind; und das Frequenzsprungzeitintervall ein Intragruppen-Frequenzsprungzeitintervall und ein Intergruppen-Frequenzsprungzeitintervall umfasst; und das Frequenzsprungfrequenzintervall ein Intragruppen-Frequenzsprungfrequenzintervall und ein Intergruppen-Frequenzsprungfrequenzintervall umfasst, wobei das Intragruppen-Frequenzsprungzeitintervall kleiner als das Intergruppen-Frequenzsprungzeitintervall ist und ein Rest des Intergruppen-Frequenzsprungzeitintervalls modulo dem Intragruppen-Frequenzsprungzeitintervall nicht null ist; das Intragruppen-Frequenzsprungfrequenzintervall LxW ist und das Intergruppen-Frequenzsprungfrequenzintervall OxMxW ist; und L und O ganze Zahlen größer 0 sind und W eine von einem PRB belegte Bandbreite angibt; wobei der Zeit-Frequenz-Ressourcenort einen Zeitdomänenort und einen Frequenzdomänenort aufweist und das Zeit-Frequenz-Ressourcenort-Bestimmungsmodul ferner ausgelegt ist zum Bestimmen, auf der Grundlage des Anfangsfrequenzdomänenorts, des Intragruppen-Frequenzsprungfrequenzintervalls und des Intergruppen-Frequenzsprungfrequenzintervalls des Kanals, des Frequenzdomänenorts des Kanals nach dem Frequenzsprung; und Bestimmen, auf der Grundlage des Intragruppen-Frequenzsprungzeitintervalls und des Intergruppen-Frequenzsprungzeitintervalls des Kanals, des Zeitdomänenorts des Kanals nach dem Frequenzsprung; und ein Sendemodul, ausgelegt zum Durchführen von Kanalübertragung mit einer NB-IoT-Basisstation auf einer Zeit-Frequenz-Ressource, die dem Zeit-Frequenz-Ressourcenort entspricht.

5. Einrichtung nach Anspruch 4, wobei, dass das Frequenzsprunginformationen-Bestimmungsmodul einen Anfangsfrequenzdomänenort des Kanals bestimmt, insbesondere Folgendes umfasst:

Bestimmen des Anfangsfrequenzdomänenorts des Kanals auf der Grundlage einer Zellenkennung, ID, einer Zelle, in welcher sich der Kanal befindet; oder Bestimmen des Anfangsfrequenzdomänenorts auf der Grundlage einer durch die NB-IoT-Basisstation gesendeten ersten Benachrichtigungssignalisierung, wobei die erste Benachrichtigungssignalisierung zum Anzeigen des Anfangsfrequenzdomänenorts verwendet wird.

6. Einrichtung nach Anspruch 4 oder 5, wobei, dass das Frequenzsprunginformationen-Bestimmungsmodul ein Frequenzsprungzeitintervall des Kanals bestimmt, insbesondere Folgendes umfasst:

Bestimmen des Frequenzsprungzeitintervalls auf der Grundlage einer Art des Kanals; oder Bestimmen des Frequenzsprungzeitintervalls auf der Grundlage eines Abdeckungsniveaus, bei dem ein NB-IoT-Endgerät lokalisiert wird; oder Bestimmen des Frequenzsprungzeitintervalls auf der Grundlage einer durch die NB-IoT-Basisstation gesendeten zweiten Benachrichtigungssignalisierung, wobei die zweite Benachrichtigungssignalisierung zum Anzeigen des Frequenzsprungzeitintervalls verwendet wird.

7. Einrichtung nach einem der Ansprüche 4 bis 6, wobei, dass das Frequenzsprunginformationen-Bestimmungsmodul ein Frequenzsprungfrequenzintervall des Kanals bestimmt, insbesondere Folgendes umfasst:

   Bestimmen des Frequenzsprungfrequenzintervalls auf der Grundlage einer Systembandbreite des NB-IoT; oder Bestimmen des Frequenzsprungfrequenzintervalls auf der Grundlage einer durch die NB-IoT-Basisstation gesendeten dritten Benachrichtigungssignalisierung, wobei die dritte Benachrichtigungssignalisierung zum Anzeigen des Frequenzsprungfrequenzintervalls verwendet wird.

8. Einrichtung nach Anspruch 4, wobei, dass das Zeit-Frequenz-Ressourcenort-Bestimmungsmodul, auf der Grundlage des Anfangsfrequenzdomänenorts, eines Intragruppen-Frequenzsprungfrequenzintervalls und eines Intergruppen-Frequenzsprungfrequenzintervalls des Kanals einen Frequenzdomänenort des Kanals nach dem Frequenzsprung bestimmt, insbesondere Folgendes umfasst:

   für einen Frequenzdomänenort $F_i$ eines i-ten Sprungs, Bestimmen einer PRB-Gruppe $Z_i$, der $F_i$ angehört, unter Verwendung der folgenden Formel (1):

   $$Z_i = (Z_0 + A) \bmod N \qquad (1);$$

   und
   für den Frequenzdomänenort $F_i$ des i-ten Sprungs, Bestimmen eines Ortes $P_i$ von $F_i$ in der PRB-Gruppe unter Verwendung der folgenden Formel (2):

   $$P_i = (P_0 + B) \bmod M \qquad (2),$$

   wobei i eine ganze Zahl größer 0 ist, $Z_0$ eine PRB-Gruppe anzeigt, zu der ein Anfangsfre-

quenzdomänenort $F_0$ gehört, $P_0$ einen Ort von $F_0$ in der PRB-Gruppe anzeigt, A das Intergruppen-Frequenzsprungfrequenzintervall anzeigt und B das Intragruppen-Frequenzsprungfrequenzintervall anzeigt.

9. Einrichtung nach Anspruch 4, wobei, dass das Zeit-Frequenz-Ressourcenort-Bestimmungsmodul, auf der Grundlage des Intragruppen-Frequenzsprungzeitintervalls und des Intergruppen-Frequenzsprungzeitintervalls des Kanals, einen Zeitdomänenort des Kanals nach dem Frequenzsprung bestimmt, insbesondere Folgendes umfasst:
   für einen Zeitdomänenort $T_{i+1}$ eines (i+1)-ten Sprungs, wobei i+1 ein ganzzahliges Vielfaches von C mod D ist, Bestimmen von $T_{i+1}$ durch Verwendung der folgenden Formel (3); ansonsten Bestimmen von $T_{i+1}$ unter Verwendung der folgenden Formel (4):

   $$T_{i+1} = T_i + (C \bmod D) \qquad (3)$$

   $$T_{i+1} = T_i + D \qquad (4),$$

   wobei i eine ganze Zahl größer 0 ist, $T_i$ einen Zeitdomänenort eines i-ten Sprungs anzeigt, C das Intergruppen-Frequenzsprungzeitintervall anzeigt und D das Intragruppen-Frequenzsprungzeitintervall anzeigt.

10. Einrichtung nach einem der Ansprüche 4 bis 9, wobei eine Einsatzweise des NB-IoT Folgendes umfasst: Innerbandeinsatz, Schutzbandeinsatz oder Unabhängiges-Frequenzband-Einsatz.

11. Einrichtung nach einem der Ansprüche 4 bis 7, wobei eine Einsatzweise des NB-IoT Schutzbandeinsatz ist, sich ein Frequenzdomänenort eines i-ten Sprungs innerhalb eines Schutzbands von einem Ende eines Long Term Evolution-, LTE-, Systemübertragungsbands befindet und sich ein Frequenzdomänenort eines (i+1)-ten Sprungs des Kanals innerhalb eines Schutzbands des anderen Endes des LTE-Systemübertragungsbands befindet, wobei i eine ganze Zahl größer als 0 ist.

## Revendications

1. Procédé de transmission de canal pour Internet des objets à bande étroite, NB-IoT, comprenant :

   la détermination, par un terminal de NB-IoT, d'informations de sauts de fréquence d'un canal, comprenant la détermination d'une localisation initiale de domaine de fréquence, d'un intervalle de fréquence de sauts de fréquence, et d'un intervalle de temps de sauts de fréquence du canal ; et

la détermination, par le terminal de NB-IoT sur la base des informations de sauts de fréquence, d'une localisation de ressource de temps-fréquence du canal après des sauts de fréquence ;

dans lequel la ressource de temps-fréquence comprend N groupes de blocs de ressources physiques, PRB, et chaque groupe de PRB comprend M PRB consécutifs, dans lequel M et N sont des nombres entiers relatifs supérieurs à 0 ; et

l'intervalle de temps de sauts de fréquence comprend un intervalle de temps de sauts de fréquence intra-groupe et un intervalle de temps de sauts de fréquence inter-groupe ; et l'intervalle de fréquence de sauts de fréquence comprend un intervalle de fréquence de sauts de fréquence intra-groupe et un intervalle de fréquence de sauts de fréquence inter-groupe, dans lequel

l'intervalle de temps de sauts de fréquence intra-groupe est inférieur à l'intervalle de temps de sauts de fréquence inter-groupe, et un reste de l'intervalle de temps de sauts de fréquence inter-groupe mod l'intervalle de temps de sauts de fréquence intra-groupe est non zéro ; l'intervalle de fréquence de sauts de fréquence intra-groupe est $L \times W$, et l'intervalle de fréquence de sauts de fréquence inter-groupe est $O \times M \times W$; et L et O sont des nombres entiers relatifs supérieurs à 0, et W indique une largeur de bande occupée par un PRB ;

dans lequel la localisation de ressource de temps-fréquence inclut une localisation de domaine de temps et une localisation de domaine de fréquence et le procédé comprend en outre :

la détermination, par le terminal de NB-IoT, sur la base de la localisation initiale de domaine de fréquence, de l'intervalle de fréquence de sauts de fréquence intra-groupe, et de l'intervalle de fréquence de sauts de fréquence inter-groupe du canal, de la localisation de domaine de fréquence du canal après les sauts de fréquence ;

la détermination, par le terminal de NB-IoT, sur la base de l'intervalle de temps de sauts de fréquence intra-groupe et de l'intervalle de temps de sauts de fréquence inter-groupe du canal, de la localisation de domaine de temps du canal après les sauts de fréquence ; et

la réalisation, par le terminal de NB-IoT, d'une transmission de canal avec une station de base de NB-IoT sur une ressource de temps-fréquence correspondant à la localisation de ressource de temps-fréquence.

2. Procédé selon la revendication 1, dans lequel la détermination, par le terminal de NB-IoT, d'une localisation initiale de domaine de fréquence du canal comprend :

la détermination, par le terminal de NB-IoT, de la localisation initiale de domaine de fréquence du canal sur la base d'un identifiant de cellule, ID, d'une cellule dans laquelle le canal est localisé ; ou

la détermination, par le terminal de NB-IoT, de la localisation initiale de domaine de fréquence sur la base d'une première signalisation de notification envoyée par la station de base de NB-IoT, dans lequel la première signalisation de notification est utilisée pour indiquer la localisation initiale de domaine de fréquence.

3. Support de stockage lisible par ordinateur, comprenant des instructions qui, lorsqu'elles sont exécutées par un ordinateur, font en sorte que l'ordinateur réalise le procédé des revendications 1 et 2.

4. Appareil de transmission de canal pour Internet des objets à bande étroite, NB-IoT, comprenant :

un module de détermination d'informations de sauts de fréquence, configuré pour déterminer des informations de sauts de fréquence d'un canal ; et

déterminer une localisation initiale de domaine de fréquence, un intervalle de fréquence de sauts de fréquence, et un intervalle de temps de sauts de fréquence du canal ;

un module de détermination de localisation de ressource de temps-fréquence, configuré pour déterminer, sur la base des informations de sauts de fréquence, une localisation de ressource de temps-fréquence du canal après des sauts de fréquence ;

dans lequel la ressource de temps-fréquence comprend N groupes de blocs de ressources physiques, PRB, et chaque groupe de PRB comprend M PRB consécutifs, dans lequel M et N sont des nombres entiers relatifs supérieurs à 0 ; et

l'intervalle de temps de sauts de fréquence comprend un intervalle de temps de sauts de fréquence intra-groupe et un intervalle de temps de sauts de fréquence inter-groupe ; et l'intervalle de fréquence de sauts de fréquence comprend un intervalle de fréquence de sauts de fréquence intra-groupe et un intervalle de fréquence de sauts de fréquence inter-groupe, dans lequel

l'intervalle de temps de sauts de fréquence intra-groupe est inférieur à l'intervalle de temps de sauts de fréquence inter-groupe, et un reste de l'intervalle de temps de sauts de fréquence inter-groupe mod l'intervalle de temps de sauts de fréquence intra-groupe est non zéro ; l'intervalle de fréquence de sauts de fréquence intra-groupe est $L \times W$, et l'intervalle de fréquence de sauts de fréquence inter-groupe est $O \times M \times W$ ; et L et O sont des nombres entiers relatifs supérieurs à 0, et W indique une largeur de bande occupée par un PRB ;

dans lequel la localisation de ressource de temps-fréquence inclut une localisation de domaine de temps et une localisation de domaine de fréquence et le module de détermination de localisation de ressource de temps-fréquence est en outre configuré pour

déterminer, sur la base de la localisation initiale de domaine de fréquence, l'intervalle de fréquence de sauts de fréquence intra-groupe, et l'intervalle de fréquence de sauts de fréquence inter-groupe du canal, la localisation de domaine de fréquence du canal après les sauts de fréquence ; et

déterminer, sur la base de l'intervalle de temps de sauts de fréquence intra-groupe et l'intervalle de temps de sauts de fréquence inter-groupe du canal, la localisation de domaine de temps du canal après les sauts de fréquence ; et

un module de transmission, configuré pour réaliser une transmission de canal avec une station de base de NB-IoT sur une ressource de temps-fréquence correspondant à la localisation de ressource de temps-fréquence.

5. Appareil selon la revendication 4, dans lequel le fait que le module de détermination d'informations de sauts de fréquence détermine une localisation initiale de domaine de fréquence du canal comprend spécifiquement :

la détermination de la localisation initiale de domaine de fréquence du canal sur la base d'un identifiant de cellule, ID, d'une cellule dans laquelle le canal est localisé ; ou
la détermination de la localisation initiale de domaine de fréquence sur la base d'une première signalisation de notification envoyée par la station de base de NB-IoT, dans lequel la première signalisation de notification est utilisée pour indiquer la localisation initiale de domaine de fréquence.

6. Appareil selon la revendication 4 ou 5, dans lequel le fait que le module de détermination d'informations de sauts de fréquence détermine un intervalle de temps de sauts de fréquence du canal comprend spécifiquement :

la détermination de l'intervalle de temps de sauts de fréquence sur la base d'un type du canal ; ou
la détermination de l'intervalle de temps de sauts de fréquence sur la base d'un niveau de couverture auquel un terminal de NB-IoT est localisé ; ou
la détermination de l'intervalle de temps de sauts de fréquence sur la base d'une deuxième signalisation de notification envoyée par la station de base de NB-IoT, dans lequel la deuxième signalisation de notification est utilisée pour indiquer l'intervalle de temps de sauts de fréquence.

7. Appareil selon l'une quelconque des revendications 4 à 6, dans lequel le fait que le module de détermination d'informations de sauts de fréquence détermine un intervalle de fréquence de sauts de fréquence du canal comprend spécifiquement :

la détermination de l'intervalle de fréquence de sauts de fréquence sur la base d'une largeur de bande de système du NB-IoT ; ou
la détermination de l'intervalle de fréquence de sauts de fréquence sur la base d'une troisième signalisation de notification envoyée par la station de base de NB-IoT, dans lequel la troisième signalisation de notification est utilisée pour indiquer l'intervalle de fréquence de sauts de fréquence.

8. Appareil selon la revendication 4, dans lequel le fait que le module de détermination de localisation de ressource de temps-fréquence détermine, sur la base de la localisation initiale de domaine de fréquence, d'un intervalle de fréquence de sauts de fréquence intra-groupe, et d'un intervalle de fréquence de sauts de fréquence inter-groupe du canal, une localisation de domaine de fréquence du canal après les sauts de fréquence comprend spécifiquement :

pour une localisation de domaine de fréquence $F_i$ d'un $i^{eme}$ saut, la détermination d'un groupe de PRB $Z_i$ auquel $F_i$ appartient en utilisant la formule suivante (1) :

$$Z_i = (Z_0 + A) \bmod N \ (1) \ ;$$

et
pour la localisation de domaine de fréquence $F_i$ du $i^{eme}$ saut, la détermination d'une localisation $P_i$ de $F_i$ dans le groupe de PRB en utilisant la formule suivante (2) :

$$P_i = (P_0 + B) \bmod M \quad (2)$$

dans lequel $i$ est un nombre entier relatif supérieur à 0, $Z_0$ indique un groupe de PRB auquel une localisation initiale de domaine de fréquence $F_0$ appartient, $P_0$ indique une localisation de $F_0$ dans le groupe de PRB, A indique l'intervalle de fréquence de sauts de fréquence inter-groupe, et $B$ indique l'intervalle de fréquence de sauts de fréquence intra-groupe.

9. Appareil selon la revendication 4, dans lequel le fait que le module de détermination de localisation de ressource de temps-fréquence détermine, sur la base de l'intervalle de temps de sauts de fréquence intra-groupe et de l'intervalle de temps de sauts de fréquence inter-groupe du canal, une localisation de domaine de temps du canal après les sauts de fréquence comprend spécifiquement :
pour une localisation de domaine de temps $T_{i+1}$ d'un $(i+1)^{\text{ème}}$ saut, lorsque i+1 est un nombre entier relatif multiple de C mod D, la détermination de $Ti+1$ en utilisant la formule suivante (3) ; autrement, la détermination de $T_{i+1}$ en utilisant la formule suivante (4) :

$$T_{i+1} = T_i + (C \bmod D) \quad (3)$$

$$T_{i+1} = T_i + D \quad (4)$$

dans lequel i est un nombre entier relatif supérieur à 0, $T_i$ indique une localisation de domaine de temps d'un $i^{\text{ème}}$ saut, C indique l'intervalle de temps de sauts de fréquence inter-groupe, et D indique l'intervalle de temps de sauts de fréquence intra-groupe.

10. Appareil selon l'une quelconque des revendications 4 à 9, dans lequel une manière de déploiement du NB-IoT comprend : un déploiement en bande, un déploiement de bande de garde, ou un déploiement de bande de fréquence indépendante.

11. Appareil selon l'une quelconque des revendications 4 à 7, dans lequel une manière de déploiement du NB-IoT est un déploiement de bande de garde, une localisation de domaine de fréquence d'un $i^{\text{ème}}$ saut du canal est localisée à l'intérieur d'une bande de garde d'une extrémité d'une bande de transmission de système d'évolution à long terme, LTE, et une localisation de domaine de fréquence d'un $(i+1)^{\text{ème}}$ saut du canal est localisée à l'intérieur d'une bande de garde de l'autre extrémité de la bande de transmission de système LTE, dans lequel i est un nombre entier relatif supérieur à 0.

An NB-IoT base station determines frequency hopping information of a channel ⟋ 101

The NB-IoT base station determines, based on the frequency hopping information, a time-frequency resource location of the channel after frequency hopping ⟋ 102

The NB-IoT base station performs channel transmission with an NB-IoT terminal on a time-frequency resource corresponding to the time-frequency resource location ⟋ 103

FIG. 1

FIG. 2

FIG. 3

401

| Frequency hopping<br>information<br>determining module |
|---|

402

| Time-frequency<br>resource location<br>determining module |
|---|

403

| Transmission<br>module |
|---|

FIG. 4

501

| Processor |
|---|

502

| Transceiver |
|---|

FIG. 5

## REFERENCES CITED IN THE DESCRIPTION

**Patent documents cited in the description**

- US 2016037514 A1